Europäisches Patentamt

European Patent Office

Office européen des brevets

(19)

(11) Veröffentlichungsnummer: **0 104 321**
**B1**

(12) **EUROPÄISCHE PATENTSCHRIFT**

(45) Veröffentlichungstag der Patentschrift:
23.04.86

(51) Int. Cl.⁴: **C 09 D 9/00**

(21) Anmeldenummer: **83105804.5**

(22) Anmeldetag: **14.06.83**

(54) **Korrekturmittel zur trockenen Entfernung von Faserschreibertinten auf nichtsaugendem Untergrund.**

(30) Priorität: **25.09.82 DE 3235899**

(43) Veröffentlichungstag der Anmeldung:
**04.04.84 Patentblatt 84/14**

(45) Bekanntmachung des Hinweises auf die Patenterteilung:
**23.04.86 Patentblatt 86/17**

(84) Benannte Vertragsstaaten:
**AT BE CH DE FR GB IT LI LU NL SE**

(56) Entgegenhaltungen:
**DE - B - 1 059 597**
**DE - B - 1 276 849**
**US - A - 3 623 908**
**US - A - 4 220 549**

**KIRK-OTHMER "Encyclopedia of chemical technology"**
**3. Auflage, Band 16, 1981 JOHN WILEY & SONS, New**
**York, Chichester, Brisbane, Toronto, Singapore Seiten**
**762-768**

(73) Patentinhaber: **Pelikan Aktiengesellschaft,**
**Podbielskistrasse 141 Postfach 103,**
**D-3000 Hannover 1 (DE)**

(72) Erfinder: **Horn, Peter, Füllenfeldstrasse 7,**
**D-3004 Isernhagen 1 (DE)**

(74) Vertreter: **Pretzell, Heilmut, Dipl.-Ing., Pelikan AG**
**Podbielskistrasse 141 Postfach 103,**
**D-3000 Hannover 1 (DE)**

ACTORUM AG

Beschreibung

Die Erfindung betrifft ein Korrekturmittel zur trockenen Entfernung von Tinten auf nichtsaugendem Untergrund.

Zum Beschreiben von Glas, Emaille, Folien (z.B. Overhead-Folien) oder sonstigen nichtsaugenden Materialien werden häufig wischfeste Tinten eingesetzt, die beispielsweise mit einem Faserschreiber aufgetragen werden. Diese Tinten enthalten Farbstoffe und Bindemittel in Wasser oder einem organischen Lösungsmittel und trocknen auf dem nichtsaugenden Untergrund fest auf.

Zur Korrektur oder zum Abwichen der so hergestellten Markierungen wurden teilweise mechanisch arbeitende Mittel verwendet, durch welche die Auftragungen abgekratzt wurden. Nachteil dieser Methode ist die stellenweise Verletzung des Untergrundes. Zum anderen wurden Lösungsmittel-Stifte eingesetzt, welche die Markierungen auf dem Untergrund wieder anlösten, so dass diese ·«feucht» abgewischt werden konnten. Der Nachteil dieser Methode besteht darin, dass die Lösungsmittel breitlaufen und somit keine genau definierte Korrektur ermöglichen. Durch den Verlauf der Lösungsmittel nach Aufnahme der zu lösenden Markierung werden darüber hinaus unscharfe und verschmierte Ränder erzeugt. Auch werden angrenzende Markierungen durch das Lösungsmittel angegriffen. Als weiterer Nachteil tritt hinzu, dass insbesondere bei dünner Auftragung eines Lösungsmittels dieses schnell verdunstet und bereits gelöste Tinten vor dem Abwischen erneut antrocknen. Ferner nimmt der Docht dieser Korrekturstifte Farbe auf, die bei der nächsten Korrektur zumindest teilweise wieder abgegeben wird und die entsprechenden Korrekturstellen anfärbt.

Neben den fest auf nichtsaugendem Untergrund auftrocknenden Tinten gibt es trocken abwischbare Tinten, die noch zusätzlich ein Trennmittel enthalten, das nach dem Trocknen einen Trennfilm ergibt, der eine feste Verbindung der Markierung mit dem Untergrund verhindert. Derart locker mit dem Untergrund verbundene Markierungen können jedoch leicht unbeabsichtigt entfernt werden.

Es ist daher Aufgabe der Erfindung, ein Korrekturmittel zur trockenen Entfernung von Tinten auf nichtsaugendem Untergrund zur Verfügung zu stellen, das insbesondere zur Entfernung wischfester Faserschreibertinten von einem glatten Untergrund geeignet sein soll.

Erfindungsgemäss wird diese Aufgabe durch ein Korrekturmittel gelöst, das gekennzeichnet ist durch einen Gehalt von 50 bis 98 Gew.-% an einem den beschriebenen Untergrund nicht anlösenden, den Farbstoff und das Bindemittel der zu entfernenden Tinten lösenden Lösungsmittel eines Siedepunktes von weniger als 150°C, von 1 bis 35 Gew.-% an einem Bindemittel und von 1 bis 40 Gew.-% an Fettalkohol und/oder Fettsäuren und/oder einem Triglycerid und/oder Alkylpolyglykoläther und/oder Mineralöl als Trennmittel. Das Trennmittel bildet nach dem Trocknen einen Trennfilm, der eine feste Verbindung der Tinte mit dem Untergrund aufhebt.

Die Erfindung schafft somit ein neuartiges System, durch das ein Trennmittel mit Hilfe des Lösungsmittels nachträglich in die Markierungen hineingebracht wird, und zwar nur an der Korrekturstelle. Nach dem Verdunsten des Lösungsmittels ist diese Stelle wieder trocken. Es hat sich aber dort ein lokal begrenzter Trennfilm ausgebildet, der ein einfaches Abwischen der Korrekturstelle gestattet. Das Bindemittel bestimmt in diesem System die Viskosität, damit der Auftrag des Korrekturmittels randscharf bleibt und nicht verlaufen kann.

Lösungsmittel, Trennmittel und Bindemittel müssen aufeinander abgestimmt sein. Ferner muss insbesondere das Lösungsmittel auf den Farbstoff und das Bindemittel der zu korrigierenden Tinten abgestimmt sein, um diese in Lösung zu bringen.

Gleichzeitig darf jedoch der Untergrund nicht angelöst werden. Darüber hinaus darf das Bindemittel durch das Trennmittel nicht erweicht werden. Es soll ferner in dem jeweiligen System die erwünschte Viskosität einstellen, die über Art und Menge des zugesetzten Bindemittels gesteuert wird.

Da die erfindungsgemässen Korrekturmittel auch von Kindern benutzt werden sollen, gilt selbstverständlich die weitere Forderung, dass die eingesetzten Flüssigkeiten ungiftig und möglichst geruchlos sind.

Das erfindungsgemässe Korrekturmittel enthält, wie bereits festgestellt, 50 bis 98 Gew.-% Lösungsmittel, 1 bis 40 Gew.-% des angegebenen Trennmittels sowie 1 bis 35 Gew.-% des Bindemittels. Bei geringerem Anteil des Lösungsmittels wird die Viskosität des Korrekturmittels zu hoch, während bei höheren Lösungsmittelanteilen eine Randverbreiterung der Korrekturstelle auftritt.

Bei einem Gehalt von weniger als 1 Gew.-% Trennmittel bildet sich kein Trennfilm mehr aus. Werden mehr als 40 Gew.-% Trennmittel eingesetzt, so dauert die Trocknung des Korrekturmittels zu lange und die Korrekturstellen verschmieren leicht.

Ist ein Anteil von weniger als 1 Gew.-% Bindemittel dem Korrekturmittel zugesetzt, so stellen sich unscharfe Ränder der Korrekturstellen ein und das Korrekturmittel fliesst aufgrund der relativ niedrigen Viskosität breit. Bei Werten von mehr als 35 Gew.-% Bindemittel erfolgt die Trocknung auf dem Untergrund zu langsam, das Korrekturmittel fliesst aufgrund der relativ hohen Viskosität schlecht und der Docht eines Korrekturstiftes verkrustet leicht.

Bevorzugt werden im Rahmen der Erfindung Gehalte von 70 bis 90 Gew.-% Lösungsmittel, 5 bis 15 Gew.-% des Trennmittels und 2 bis 10 Gew.-% Bindemittel.

Als Lösungsmittel werden Alkohole mit 1 bis 6 Kohlenstoffatomen und/oder Glykoläther verwendet. Bei den Alkoholen handelt es sich beispielsweise um Äthanol, Isopropanol und Butanol. Die Glykoläther sind gewöhnlich Äthylen- und Propylenglykoläther. Bei den verwendeten Lösungsmitteln handelt es sich um Flüssigkeiten, die einen Siedepunkt von weniger als 150°C aufweisen.

Als Trennmittel werden ein oder mehrere Fettalkohole und/oder Fettsäuren und/oder Triglyceride und/oder Alkylpolyglykoläther und/oder Mineralöl eingesetzt.

Bei den Bindemitteln handelt es sich um Collodiumwolle und/oder Polyvinylbutyral und/oder Acrylate und/oder Polyvinylacetat und/oder Stärkeäther und/oder Stärkeester und/oder Celluloseester und/oder Polyvinylpyrrolidon.

Zweckmässig werden aus jeder Gruppe der Bestandteile mehrere Substanzen in Mischung miteinander eingesetzt, damit das Korrekturmittel möglichst universell für unterschiedliche Tinten verwendet werden kann.

Die Erfindung betrifft auch einen Korrekturstift zur trockenen Entfernung von Tinten auf nichtsaugenden Oberflächen.

Mit dem erfindungsgemässen Korrekturmittel lassen sich Korrekturen auf vielerlei glatten, nichtsaugenden Materialien, wie beispielsweise Kunststoff-Folien, Glas, Emaille oder Metall, durchführen. So eignen sich diese Korrekturmittel auch insbesondere zur Durchführung von Korrekturen auf Overhead-Folien.

Die nachfolgenden Rezeptur-Beispiele beschreiben Ausführungsformen der Erfindung. Die Prozentzahlen geben jeweils Gewichtsprozente an.

*Beispiel 1*

| | |
|---|---|
| Isopropanol | 61 |
| Methoxypropanol | 25 |
| ölförmige Triglyceride | 5 |
| ungesättigte Fettalkohole | 5 |
| Polyvinylbutyral | 4 |

*Beispiel 2*

| | |
|---|---|
| Isopropanol | 20 |
| Äthylglykol | 30 |
| Äthanol | 36 |
| ungesättigte Fettalkohole | 10 |
| Collodiumwolle, alkohollöslich | 4 |

*Beispiel 3*

| | |
|---|---|
| Äthanol | 57 |
| Äthylglykol | 30 |
| Polydiol 200* | 10 |
| Äthylcellulose | 3 |

* Polyäthylenglykol eines Molekulargewichts von 200

*Beispiel 4*

| | |
|---|---|
| Isopropanol | 20 |
| Äthanol | 44 |
| Äthylenglykol | 20 |
| Polydiol | 5 |
| ölförmige Triglyceride | 5 |
| Polyvinylpyrrolidon | 6 |

*Beispiel 5*

| | |
|---|---|
| Methoxypropanol | 30 |
| Äthanol | 20 |
| Isopropanol | 35 |
| Alkylpolyglykoläther | 5 |
| Mineralöl | 5 |
| Acrylat (Plexigum P 28®) | 5 |

*Beispiel 6*

| | |
|---|---|
| Äthanol | 64 |
| Äthylglykol | 20 |
| ungesättigte Fettalkohole | 5 |
| äthoxyliertes Fettsäureamid | 5 |
| Acrylat | 6 |

*Beispiel 7*

| | |
|---|---|
| Äthylglykol | 20 |
| Isopropanol | 40 |
| Äthanol | 26 |
| Ölsäure | 10 |
| Polyvinylbutyral | 4 |

Es wurden jeweils Flüssigkeiten erhalten, mit denen sich auf Kunststoff-Folien aufgebrachte Tinte trocken entfernen liess. Selbstverständlich lassen sich die erfindungsgemässen Korrekturmittel auch in anderer Form, z.B. als Paste, herstellen.

**Patentansprüche**

1. Korrekturmittel zur trockenen Entfernung von Tinten auf nichtsaugenden Oberflächen, gekennzeichnet durch einen Gehalt von 50 bis 98 Gew.-% an einem den beschriebenen Untergrund nicht anlösenden, den Farbstoff und das Bindemittel der zu entfernenden Tinten lösenden Lösungsmittel eines Siedepunktes von weniger als 150°C, von 1 bis 35 Gew.-% an einem Bindemittel und von 1 bis 40 Gew.-% an Fettalkohol und/oder Fettsäuren und/oder einem Triglycerid und/oder Alkylpolyglykoläther und/oder Mineralöl als Trennmittel, welches nach dem Trocknen einen Trennfilm bildet, der eine feste Verbindung der Tinte mit dem Untergrund aufhebt.

2. Korrekturmittel nach Anspruch 1, dadurch gekennzeichnet, dass es 70 bis 90 Gew.-% Lösungsmittel, 2 bis 10 Gew.-% Bindemittel und 5 bis 15 Gew.-% Trennmittel enthält.

3. Korrekturmittel nach Anspruch 1 oder 2, dadurch gekennzeichnet, dass es als Lösungsmittel einen Alkohol mit 1 bis 6 Kohlenstoffatomen und/oder einen Glykoläther enthält.

4. Korrekturmittel nach einem der Ansprüche 1 bis 3, dadurch gekennzeichnet, dass es als Bindemittel Collodiumwolle und/oder Polyvinylbutyral und/oder Acrylat und/oder Polyvinylacetat und/oder Stärkeäther und/oder Stärkeester und/oder Celluloseester und/oder Polyvinylpyrrolidon enthält.

5. Korrekturstift zur trockenen Entfernung von Tinten auf nichtsaugenden Oberflächen, gekennzeichnet durch einen Gehalt eines Korrekturmittels nach einem der Ansprüche 1 bis 4.

**Revendications**

1. Agent de correction pour l'enlèvement à sec d'encres de surfaces non absorbantes, caractérisé par une teneur de 50 à 98% en poids d'un solvant qui ne dissout pas le support, mais dissout la matière colorante et le liant des encres à enlever, ayant un point d'ébullition inférieur à 150°C, entre 1 et 35% en poids d'un liant et entre 1 et 40% en poids d'un alcool gras et/ou d'acides gras et/ou un triglycéride et/ou d'un éther d'alkylpolyglycol et/ou d'une huile minérale comme agent-séparateur, et qui après séchage forme un film-séparateur suppriment la liaison solide entre l'encre et le support.

2. Agent de correction selon la revendication 1, caractérisé en ce qu'il contient entre 70 et 90% en poids d'un solvant, 2 à 10% en poids d'un liant et de 5 à 15% en poids d'un agent-séparateur.

3. Agent de correction selon l'une quelconque des revendications 1 ou 2, caractérisé en ce que comme solvant il contient un alcool à 1-6 atomes de carbone et/ou un éther glycol.

4. Agent de correction selon l'une des revendications 1 à 3, caractérisé en ce que comme liant, il contient de la laine de collodium et/ou du polyvinyl butyral et/ou de l'acrylate et/ou de l'acétate de polyvinyle et/ou des éthers forts et/ou des esters forts et/ou du polyvinylpyrrolidone et/ou de l'ester de cellulose.

5. Baton-correcteur pour enlever à sec de l'encre de surfaces non absorbantes, caractérisé en ce qu'il contient un agent de correction selon l'une des revendications 1 à 4.

**Claims**

1. A correcting agent for the dry removal of ink applied to a non-absorbent base, characterized in that the agent contains

for between 50 and 98% of its weight a solvent which is incapable of attacking said base yet capable of dissolving the dye and the bonding agent of the ink to be removed and the boiling point of which is less than 150°C,

for between 1 and 35% of its weight a bonding agent, and

for between 1 and 40% of its weight a separating agent in the form of a fatty alcohol and/or a fatty acid and/or a triglyceride and/or alkyl polyglycol ether and/or a mineral oil,

and in that the separating agent forms, when dried, a separating film which eliminates the ink's firm bond with the base.

2. A correcting agent according to claim 1, characterized in that the solvent contained therein amounts to between 70 and 90% of its weight, the bonding agent to between 2 and 10% of its weight and the separating agent to between 5 and 15% of its weight.

3. A correcting agent according to claim 1 or claim 2, characterized in that the solvent contained therein is an alcohol having between 1 and 6 carbon atoms and/or a glycol ether.

4. A correcting agent according to any of the claims 1 to 3, characterized in that the bonding agent contained therein is collodion cotton and/or polyvinyl butyral and/or acrylate and/or polyvinyl acetate and/or starch ester and/or cellulose ester and/or polyvinyl pyrrolidone.

5. A correcting pencil for the dry removal of ink applied to a non-absorbent base, characterized in that it contains a correcting agent as claimed in any of the claims 1 to 4.